# EUROPÄISCHE PATENTSCHRIFT

(11) **EP 1 281 918 B1**
(45) Veröffentlichungstag und Bekanntmachung des Hinweises auf die Patenterteilung: **18.10.2006**
(21) Anmeldenummer: 02004832.8
(22) Anmeldetag: 02.03.2002
(51) Int. Cl.: F24D 17/00

(54) **Anlage zum Bereiten von Warmwasser mittels eines Warmwasserspeichers**
Installation for making warm water with a warm water accumulator
Installation de préparation d'eau chaude avec accumulateur d'eau chaude

(30) Priorität: 04.08.2001 DE 10138388
(43) Veröffentlichungstag der Anmeldung: 05.02.2003
(73) Patentinhaber: ROBERT BOSCH GMBH, 70442 Stuttgart (DE)
(72) Erfinder: Kroell, Ulrich, 72654 Neckartenzlingen (DE)

(56) Entgegenhaltungen:
- EP-A- 0 334 797
- EP-A- 0 551 534
- WO-A-01/63182
- DE-A- 19 524 079
- GB-A- 2 088 097

## Beschreibung

Die Erfindung betrifft eine Anlage zum Bereiten von Warmwasser mittels eines Warmwasserspeichers, dessen unterer Speicherbereich mittels Sonnenkollektoren und einer Heizschlange erwärmt wird und dessen oberer Nachheiz-Speicherbereich beim Vorliegen einer Wärmeanforderung über eine Warmwasser-Ladepumpe und einem Wärmeübertrager eines Heizgerätes nachbeheizt wird.

### Stand der Technik

Bei den bekannten Anlagen dieser Art wird das Wasser im oberen Nachheiz-Speicherbereich mittels einer Heizschlange nacherwärmt. Dabei wird das Nachheizvolumen nach dem erforderlichen Komfort ohne Solarerwärmung bestimmt. Ein 300 I-Warmwasserspeicher hat z.B. ein Nachheizvolumen von ca 130 I, das durch eine Zusatzheizeinrichtung ständig auf z.B. 60° C gehalten wird. Diese ständige Vorhaltung des warmen Wassers hat einen stetigen hohen Energieverbrauch zur Folge. Zudem vergrößert das erforderliche Nachheizvolumen das Gesamtspeichervolumen des Warmwasserspeichers beachtlich. Ein weiterer Nachteil der bekannten Warmwasserspeicher mit Solarerwärmung liegt darin, dass sie sich ohne größeren Aufwand nicht zuverlässig desinfizieren lassen.

Die Patentanmeldung EP 0 551 534 A1 zeigt einen Warmwasserspeicher, in dessen Nachheizbereich zwei Sensoren zur Erfassung von Temperatur und Wärmeinhalt übereinander angeordnet sind.

Es ist Aufgabe der Erfindung, eine Anlage zum Bereiten von Warmwasser der eingangs erwähnten Art so zu verbessern, dass der Nachheizenergiebedarf reduziert und minimiert ist. Zudem soll das Nachheizvolumen keine Vergrößerung des Gesamtspeichervolumens zur Folge haben oder bei gleichbleibendem Gesamtspeichervolumen der Anteil des durch die Solarenergie erwärmten Volumens vergrößert werden können.

### Vorteile der Erfindung

Diese Aufgabe wird nach der Erfindung dadurch gelöst, dass im oberen Nachheiz-Speicherbereich des Warmwasserspeichers mindestens zwei Sensoren zur Erfassung des Wärmeinhalts und der Temperatur übereinander angeordnet sind, wobei der unterste Sensor so gewählt ist, dass er das größtmögliche Nachheizvolumen erfasst, dass die anderen Sensoren Zwischenwerten dieses Nachheizvolumens zugeordnet sind und dass der Warmwasser-Ladepumpe wahlweise Wasser aus dem oberen oder unteren Speicherbereich des Warmwasserspeichers oder dem Kaltwasser-Anschluss zuführbar ist.

Die Warmwasser-Ladepumpe wird wie das Heizgerät bei einer anstehenden oder auftretenden Wärmeanforderung eingeschaltet und fördert Wasser aus dem oberen Nachheiz-Speicherbereich, dem unteren Speicherbereich des Warmwasserspeichers oder direkt vom Kaltwasser-Anschluss zum Wärmeübertrager des Heizgerätes. Das über das Heizgerät aufgewärmte Wasser im Wärmeübertrager wird im oberen Bereich des Nachheiz-Speicherbereiches in den Warmwasserspeicher eingespeist (eingeschichtet, bekanntes Schichtladeprinzip).

Dabei ist nach einer Ausgestaltung vorgesehen, dass der Wärmeübertrager als Luft-Wasser-Wärmetauscher ausgebildet ist, der durch das Brenngas eines gasbetriebenen Heizgerätes mit Wärmeenergie versorgt ist, wobei eine gute Wärmeübertragung insbesondere dadurch erfolgt, dass das Heizgerät einen Gasbrenner mit Brennkammer aufweist und dass der Wärmeübertrager im Ausgang der Brennkammer angeordnet ist.

Die Abschaltung der Warmwasser-Ladepumpe erfolgt bei den bekannten Warmwasserspeichern dieser Art durch einen im unteren Teil des Nachheiz-Speicherbereiches eingebauten Temperatursensor beim Erreichen einer vorgegebenen Temperatur.

Bei der erfindungsgemäßen Anlage erfolgt die Beendigung der Nachheizzeit durch die Erfassung des Wärmeinhaltes und der Temperatur über die in unterschiedlicher Höhe im Nachheiz-Speicherbereich angeordneten Temperatursensoren. Die Lage des untersten Temperatursensors ist dem größtmöglichen Nachheizvolumen zugeordnet, das z.B. bei einem 25 KW-Heizgerät mit 75 I gewählt ist. Die darüber angeordneten Temperatursensoren erfassen Zwischenwerte von z.B. 50 I und 25 I des Nachheiz-Speichervolumens, so dass in Abhängigkeit von den erfassten Kriterien der Temperatursensoren und ihrer Lage im Nachheiz-Speicherbereich eine energiesparende Nachheizung realisierbar ist.

Darüber hinaus kann eine Desinfektion des gesamten Speicherinhaltes dadurch ausgeführt werden, dass der Warmwasser-Ladepumpe Wasser aus dem Nachheiz-Speicherbereich zuführbar ist.

Die Wasserzufuhr für die Warmwasser-Ladepumpe ist auf einfache Weise dadurch variierbar und in die energiesparende Steuerung des Heizgerätes und damit des Warmwasserspeichers einzubeziehen, dass der Eingang der Warmwasser-Ladepumpe über eine Umsteuereinrichtung wahlweise mit dem oberen Nachheiz-Speicherbereich oder dem unteren Speicherbereich des Warmwasserspeichers oder dem Kaltwasser-Anschluss verbindbar ist.

Dabei kann die Nachheizung an die Benutzergewohnheiten angepasst werden. Eine Art Voreinstellung kann dadurch gegeben sein, dass die Warmwasser-Ladepumpe beim Vorliegen einer Wärmeanforderung einschaltbar ist und beim Erreichen eines vorgegebenen programmierten Benutzerprogrammes abschaltbar ist. Das Benutzerprogramm kann dabei in Bezug auf Warmwaserverbrauch, Warmwassertemperatur und Verbrauchszeit individuell veränderbar und programmierbar sein.

Zur Vereinfachung des Betriebsablaufs, insbesondere zur Anpassung der Nachheizung an die Benutzergewohnheiten, kann zusätzlich vorgesehen sein, dass die individuellen Benutzergewohnheiten in Bezug auf Warmwassermenge, Warmwassertemperatur und Verbrauchszeit mittels Sensoren automatisch erfassbar sind und dass ein Kleinrechner in Abhängigkeit des gespeicherten Benutzerprogramms und den erfassten Kriterien die Ein- und Ausschaltung des Heizgerätes und der Ladepumpe und damit die Nachheizung des oberen Speicherbereiches steuert. Dies lässt den Energiebedarf für die Nachheizung weiter minimieren.

### Zeichnung

Die Erfindung wird anhand eines als Prinzipschaltbild dargestellten Ausführungsbeispiels näher erläutert.

### Ausführungsbeispiel

Ein Warmwasserspeicher 10 ist mit seinem Volumen in einen oberen Nachheiz-Speicherbereich 11 und einen unteren Speicherbereich 12 unterteilt. Der untere Speicherbereich 12 enthält eine Heizschlange 13, die in bekannter Weise durch das in einer Solaranlage zirkulierende Wasser aufgeheizt wird. Dem Warmwasserspeicher 10 wird am oberen Anschluss Warmwasser WW entnommen. Über den unteren Anschluss "B" wird Kaltwasser KW entsprechend nachgeführt.

Wie der Anschluss "A" zeigt, wird im untersten Bereich des Nachheiz-Speicherbereichs 11 Wasser einer Umschalteinrichtung 32 angeboten, der auch Wasser über den unteren Anschluss "B" oder direkt Kaltwasser KW zugeführt werden kann. Über die Umschalteinrichtung 32 kann der Weg ausgewählt werden, über den das über die Warmwasser-Ladepumpe 30 einem Wärmeübertrager 31 zugeführte Wasser gelangen soll.

Der Wärmeübertrager 31 ist Bestandteil eines gasbeheizten Heizgerätes 20, das mittels eines Brenners 25 mit einer Brennkammer den Wärmeübertrager 31 mit Wärmeenergie versorgt. Der Wärmeübertrager 31 ist dabei als Luft-Wasser-Wärmetauscher ausgebildet, der von dem Brenngas des Brenners 25 durchströmt wird. Das Brenngas gibt dabei Wärmeenergie ab, was zur Erwärmung des den Wärmeübertrager 31 durchfließenden Wassers führt. Das erwärmte Wasser wird dem Nachheiz-Speicherbereich 11 des Warmwasserspeichers 10 zugeführt.

In dem oberen Nachheiz-Speicherbereich 11 und im untersten Teil des Nachheiz-Speicherbereiches 11 sind Temperatursensoren ϑ₁ und ϑ₂ angeordnet, die die Temperatur des Wassers an diesen Stellen des Warmwasserspeichers 10, d.h. des Nachheiz-Speicherbereiches 11, erfassen. Durch ihre Anordnung lässt sich daraus auch ein Kriterium über den Wärmeinhalt der Teilvolumen im Nachheiz-Speicherbereich 11 ableiten und so die Nachheizung gezielten Vorgaben oder Wünschen des Benutzers anpassen. Auf diese Weise kann die Nachheizung, d.h. die Ein- und Ausschaltung des Heizgerätes 20 und der Warmwasser-Ladepumpe 31 optimal an die Benutzergewohnheiten anpassen und so der Energiebedarf für die Nachheizung optimal minimieren.

Dazu kann die Steuerung des Heizgerätes 20 ein vorgegebenes Benutzerprogramm gespeichert haben, das bei einer Wärmeanforderung für die Ein- und Ausschaltung des Heizgerätes und der Warmwasser-Ladepumpe 30 sorgt und dabei in Bezug auf Warmwassermenge, Wassertemperatur und Verbrauchszeit die Vorgaben im Programm berücksichtigt. Das Programm kann jedoch vom Benutzer gemäß seinen Wünschen individuell geändert und einprogrammiert werden. Ja es ist sogar denkbar, dass geeignete Sensoren die Gewohnheiten des Benutzers der Anlage automatisch erfassen und anhand der erfassten Kriterien, wie Warmwassermenge, Wassertemperatur, Entnahmezeiten, das für die Nachheizung optimale Steuern des Heizgerätes 20 und der Warmwasser-Ladepumpe 30 errechnen und durchführen. Dies ist mit den heute zur Verfügung stehenden Kleinrechnern ohne großen Kostenaufwand leicht realisierbar. Die dabei erzielbare Energieeinsparung macht dies wieder wett.

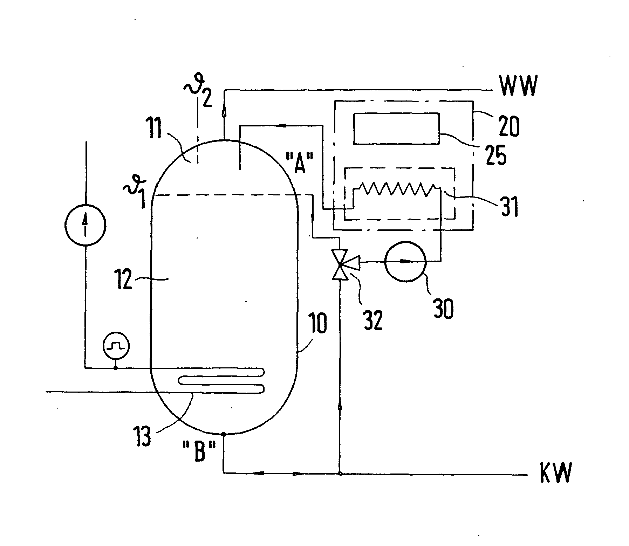

## Patentansprüche

1. Anlage zum Bereiten von Warmwasser mittels eines Warmwasserspeichers (10), dessen unterer Speicherbereich (12) mittels Sonnenkollektoren und einer Heizschlange erwärmt wird und dessen oberer Nachheiz-Speicherbereich (11) beim Vorliegen einer Wärmeanforderung über eine Warmwasser-Ladepumpe (30) und einen Wärmeüberträger (31) eines Heizgerätes (20) nachbeheizt wird,
wobei
im oberen Nachheiz-Speicherbereich (11) des Warmwasserspeichers (10) mindestens zwei Sensoren (ϑ₁, ϑ₂) zur Erfassung des Wärmeinhaltes und der Temperatur übereinander angeordnet sind, wobei der unterste Sensor (ϑ₁) so gewählt ist, dass er das größtmögliche Nachheizvolumen erfasst,
dass die anderen Sensoren (*ϑ*_{*2*}) Zwischenwerten dieses Nachheizvolumens zugeordnet sind und
dass der Warmwasser-Ladepumpe (30) wahlweise Wasser aus dem oberen oder unteren Speicherbereich (11 oder 1 2) des Warmwasserspeichers (10) oder dem Kaltwasser-Anschluss (KW) zuführbar ist.

2. Anlage nach Anspruch 1,
**dadurch gekennzeichnet,**
**dass** zwecks thermischer Desinfektion des gesamten Speicherinhaltes des Warmwasserspeichers (10) der Warmwasser-Ladepumpe (30) Wasser aus dem Nachheiz-Speicherbereich (11) zuführbar ist.

3. Anlage nach Anspruch 1 oder 2,
**dadurch gekennzeichnet,**
**dass** der Eingang der Warmwasser-Ladepumpe (30) über eine Umsteuereinrichtung (32) wahlweise mit dem oberen Nachheiz-Speicherbereich (11) oder dem unteren Speicherbereich (12) des Warmwasserspeichers (10) oder dem Kaltwasser-Anschluss (KW) verbindbar ist.

4. Anlage nach einem der Ansprüche 1 bis 3,
**dadurch gekennzeichnet,**
**dass** die Warmwasser-Ladepumpe (30) beim Vorliegen einer Wärmeanforderung einschaltbar ist und beim Erreichen eines vorgegebenen programmierten Benutzerprogrammes abschaltbar ist.

5. Anlage nach Anspruch 4,
**dadurch gekennzeichnet,**
**dass** das Benutzerprogramm in Bezug auf Warmwasserverbrauch, Warmwassertemperatur, Verbrauchszeit individuell veränderbar und programmierbar ist.

6. Anlage nach Anspruch 4 oder 5,
**dadurch gekennzeichnet,**
**dass** die individuellen Benutzergewohnheiten in Bezug auf Warmwassermenge, Warmwassertemperatur und Verbrauchszeit mittels Sensoren automatisch erfassbar sind und
**dass** ein Kleinrechner in Abhängigkeit des gespeicherten Benutzerprogramms und den erfassten Benutzergewohnheiten die Ein- und Ausschaltung des Heizgerätes (20) und der Ladepumpe (30) und damit die Nachheizung des oberen Speicherbereiches (11) steuert.

7. Anlage nach einem der Ansprüche 1 bis 6,
**dadurch gekennzeichnet,**
**dass** der Wärmeübertrager (31) als Luft-Wasser-Wärmetauscher ausgebildet ist, der durch das Brenngas eines gasbetriebenen Heizgerätes (20) mit Wärmeenergie versorgt ist.

8. Anlage nach Anspruch 7,
**dadurch gekennzeichnet,**
**dass** das Heizgerät (20) einen Gasbrenner (25) mit Brennkammer aufweist und
**dass** der Wärmeübertrager (31) im Ausgang der Brennkammer angeordnet ist.

## Claims

1. A system for preparing hot water by means of a hot water storage system (10) whose lower storage area (12) is heated by means of solar collectors and a heating coil and whose upper reheating storage area (11) is reheated in the presence of a heat requirement by means of a hot water loading pump (30) and a heat exchanger (31) of a heater (20),
wherein
in the upper reheating storage area (11) of the hot water storage system (10) at least two sensors (ϑ₁, ϑ₂) are provided one above the other for detecting the heat content and the temperature, wherein the lowermost sensor (ϑ) is selected so that it detects the largest possible reheating volume,
the other sensors (ϑ) are allocated intermediate values of this reheating volume and
the hot water loading pump (30) is optionally supplied with water from the upper or lower storage area (11 or 12) of the hot water storage system (10) of the cold water connection (KW).

2. The system according to claim 1,
**characterised in**
**that** water is supplied from the reheating storage area (11) to the hot water loading pump (30) for the purpose of disinfecting the entire storage content of the hot water storage system (10).

3. The system according to claim 1 or claim 2,
**characterised in**
**that** the input of the hot water loading pump (30) is optionally connected by means of a reversing device (32) to the upper reheating storage area (11) or the lower storage area (12) of the hot water storage system (10) or the cold water connection (KW).

4. The system according to any one of claims 1 to 3,
**characterised in**
**that** the hot water loading pump (30) can be switched on when there is a requirement for heat and can be switched off when a predetermined programmed user program is reached.

5. The system according to claim 4,
**characterised in**
**that** the user program can be varied individually and programmed in relation to hot water consumption, hot water temperature and consumption time.

6. The system according to claim 4 or claim 5,
**characterised in**
**that** in that the individual user habits in relation to quantity of hot water, hot water temperature and consumption time can be detected automatically by means of sensors and
**that** a mini-computer controls the switching on and off of the heater (20) and the loading pump (30) and therefore the reheating of the upper storage area (11) depending on the stored user program and the detected user habits.

7. The system according to any one of claims 1 to 6,
**characterised in**
**that** the heat exchanger (31) is embodied as an air-water heat exchanger which is supplied with thermal energy by the fuel gas of a gas-operated heater (20).

8. The system according to claim 7,
**characterised in**
**that** the heater (20) has a gas burner (25) with combustion chamber and
**that** the heat exchanger (31) is arranged in the output of the combustion chamber.

## Revendications

1. Installation pour la préparation d'eau chaude au moyen d'un chauffe-eau à accumulation (10), dont la zone de stockage inférieure (12) est réchauffée au moyen de collecteurs solaires et d'un serpentin et dont la zone de stockage supérieure pour chauffage complémentaire (11) est chauffée ultérieurement lorsqu'on a une demande de chaleur au moyen d'une pompe à suralimentation en eau chaude (30) et d'un échangeur de chaleur (31) d'un appareil de chauffage (20),
au moins deux capteurs (ϑ₁, ϑ₂) pour l'enregistrement du contenu calorifique de la température étant disposés l'un au-dessus de l'autre dans la zone de stockage supérieure pour chauffage complémentaire (11) du chauffe-eau à accumulation (10), le capteur (ϑ₁) inférieur étant choisi de telle sorte qu'il enregistre le volume de chauffage complémentaire le plus grand possible,
de telle sorte que les autres capteurs (ϑ₂) sont attribués à des valeurs intermédiaires de ce volume de chauffage complémentaire et
que au choix de l'eau provenant de la zone de stockage supérieure ou de la zone de stockage inférieure (11 ou 12) du chauffe-eau à accumulation (10) ou du branchement d'eau froide (KW) peut être amenée à la pompe à suralimentation en eau chaude (30).

2. Installation selon la revendication 1,
**caractérisée en ce que**,
pour la désinfection thermique du contenu de stockage global du chauffe-eau à accumulation (10), de l'eau provenant de la zone de stockage pour chauffage complémentaire (11) peut être amenée à la pompe à suralimentation en eau chaude (30).

3. Installation selon la revendication 1 ou 2,
**caractérisée en ce que**
l'entrée de la pompe à suralimentation en eau chaude (30) peut être reliée au moyen d'un dispositif de renversement de marche (32) au choix à la zone de stockage supérieure pour chauffage complémentaire (11) ou à la zone de stockage inférieure (12) du chauffe-eau à accumulation (10) ou au branchement d'eau froide (KW).

4. Installation selon l'une quelconque des revendications 1 à 3,
**caractérisée en ce que**
la pompe à suralimentation en eau chaude (30) peut être enclenchée lorsqu'on a une demande de chaleur et déconnectée lorsqu'on atteint un programme utilisateur programmé et prédéfini.

5. Installation selon la revendication 4,
**caractérisée en ce que**
le programme utilisateur peut être modifié et programmé individuellement en ce qui concerne la consommation d'eau chaude, la température d'eau chaude, le temps de consommation.

6. Installation selon la revendication 4 ou 5,
**caractérisée en ce que**
les habitudes individuelles de l'utilisateur en ce qui concerne la quantité d'eau chaude, la température d'eau chaude et le temps de consommation peuvent être enregistrées automatiquement au moyen de capteurs et
**en ce qu'**un mini-ordinateur commande en fonction du programme utilisateur stocké et des habitudes de l'utilisateur enregistrées la connexion et la déconnexion de l'appareil de chauffage (20) et de la pompe à suralimentation (30) et donc le chauffage complémentaire de la zone de stockage supérieure (11).

7. Installation selon l'une quelconque des revendications 1 à 6,
**caractérisée en ce que**
l'échangeur de chaleur (31) est conçu comme un échangeur de chaleur air-eau, qui est alimenté en énergie de chaleur par le gaz de combustion d'un appareil de chauffage (20) fonctionnant au gaz.

8. Installation selon la revendication 7,
**caractérisée en ce que**
l'appareil de chauffage (20) présente un brûleur à gaz (25) avec une chambre de combustion et
**en ce que** l'échangeur de chaleur (31) est disposé dans la sortie de la chambre de combustion.
